# EUROPEAN PATENT SPECIFICATION

(11) **EP 2 408 233 B1**
(45) Date of publication and mention of the grant of the patent: **22.10.2014**
(21) Application number: 10750382.3
(22) Date of filing: 12.03.2010
(51) Int. Cl.: H04W 36/00, H04W 36/10

(54) **CALL HANDOVER METHOD AND MOBILE COMMUNICATION SYSTEM AMONG BASE STATION SYSTEMS**
RUFÜBERGABEVERFAHREN UND MOBILES KOMMUNIKATIONSSYSTEM UNTER BASISSTATIONSSYSTEMEN
PROCÉDÉ DE TRANSFERT D'APPEL ET SYSTÈME DE COMMUNICATION MOBILE ENTRE SYSTÈMES DE STATION DE BASE

(30) Priority: 13.03.2009 CN 200910118500
(43) Date of publication of application: 18.01.2012
(73) Proprietor: ZTE Corporation, Shenzhen, Guangdong 518057 (CN)
(72) Inventor: LI, Jing, Shenzhen Guangdong 518057 (CN); WANG, Xinhui, Shenzhen Guangdong 518057 (CN)
(74) Representative: Waddington, Richard
(86) International application number: PCT/CN2010/071030
(87) International publication number: WO 2010/102586

(56) References cited:
- EP-A2- 1 148 753
- WO-A1-00/48417
- CN-A- 1 115 165
- CN-A- 101 361 390
- KR-A- 20010 055 144
- HUAWEI TECHNOLOGIES CO LTD: "1.1 Requirement Background", 3GPP DRAFT; GP-090077 THE PROPOSED MECHANISM FOR LOCAL SWITCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. St Julians, Malta; 20090216 - 20090220, 12 February 2009 (2009-02-12), XP050594356, [retrieved on 2009-02-12]
- "3rd Generation Partnership Project; Technical Specification Group GSM/EDGE Radio Access Network; Mobile Switching Centre - Base Station System (MSC-BSS) interface; Layer 3 specification (Release 8); 3GPP TS 48.008 V8.6.0", , 1 February 2009 (2009-02-01), XP055079244, Retrieved from the Internet: URL:http://www.3gpp.org/ftp/Specs/archive/ 48_series/48.008/48008-860.zip [retrieved on 2013-09-13]
- CHINA MOBILE ET AL: "No title retrieved", 3GPP DRAFT; GP-090076 DRAFT WORK ITEM DESCRIPTION ON LOCAL SWITCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. St Julians, Malta; 20090216 - 20090220, 12 February 2009 (2009-02-12), XP050594355, [retrieved on 2009-02-12]

## Description

### Technical Field

The present invention relates to the communication field, and particularly, to a call handover method between Base Station Systems (BSS) and a mobile communication system.

### Background of the Related Art

In the current Global System for Mobile Communications (GSM), the Mobile Switching Center Server (MSC Server or MSC) and the Base Station Controller (BSC) communicate with each other by using the A interface; and the Mobile Station (MS) and the Base Transceiver Station (BTS) communicate with each other by using the Um interface; besides, the BTS and the BSC connect with each other by the Abis interface.

When the GSM system establishes a call, whether this call is based on the Time Division Multiplexing (TDM) bearer or based on the Internet Protocol (IP) bearer, one call identifier is allocated for each call in the process of carrying out the assignment in the A interface.

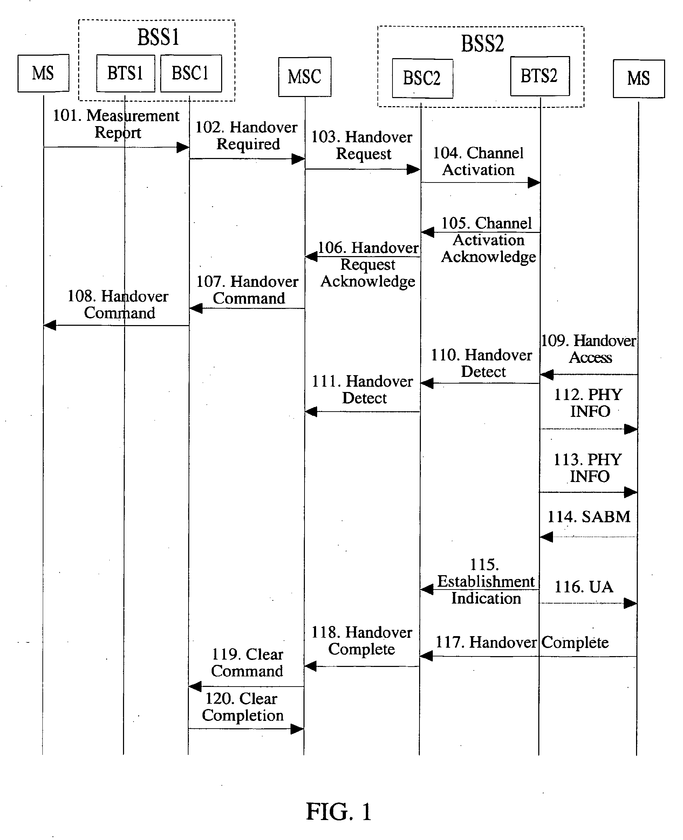

FIG. 1 is a flow chart of the call handover between BSSs (including the BSC and the BTS) in the current GSM system, and as shown in FIG. 1, this flow comprises following steps:
101: the MS sends a Measurement Report to the BTS1, and the BTS1 further forwards the Measurement Report to the BSC1;
102: the BTS1 sends a Handover Required (Handover RQD) message to the MSC;
103: the MSC sends a Handover Request (Handover REQ) message to the handover destination BSC (BSC2);
104: the BSC2 sends a Channel Activation (Channel ACT) message to the BTS2 of the destination cell so as to activate the channel;
105: the BTS2 returns a Channel Activation Acknowledge (Channel Activation ACK) message to the BSC2;
106: after activating a new channel, the BSC2 sends a Handover REQ ACK message to the MSC, and notifies the MSC that the channel has been ready;
107: the MSC sends a Handover Command (Handover CMD) message to the BSC1;
108: the BSC1 sends a Handover Command message to the BTS1, and the BTS 1 forwards this message to the MS;
109: after receiving the Handover Command, the MS attempts to access the BTS2, and sends a Handover Access message to the BTS2;
110: after receiving the Handover Access message sent by the MS, the BTS2 sends a Handover Detect message to the BSC2;
111: the BSC2 sends a Handover Detect message to the MSC;
112∼113: the BTS2 sends a Physical Information (PHY INFO) message to the MS, and this message includes contents including synchronization information which enables the MS to correctly access the BTS2 and so on;
114: after receiving the PHY INFO, the MS sends a Set Asynchronous Balanced Mode (SABM) frame to the BTS2;
115: after receiving the SABM frame, the BTS2 sends the Establishment Indication (EST IND) message to the BSC2, and notifies the BSC2 that the wireless link has been established.
116: at the same time when the BTS2 sends the Establishment Indication message, the BTS2 responds an Unnumbered Acknowledgement (UA) frame to the MS, and notifies the MS that the wireless link layer has been established;
117: the MS sends a Handover Complete message to the BTS2, and the BTS2 forwards the Handover Complete message to the BSC2, and notifies the BSC2 that the handover has been completed;
118: the BSC2 sends the Handover Complete message to the MSC;
119∼120: after receiving the Handover Complete message sent by the BSC2, the MSC sends the Clear Command (CMD) message to the BSC1, and the BSC1 initiates the local release to release the original channel, and at the same time responds a Clear Completion (CMP) message to the MSC to indicate the clear has been completed.

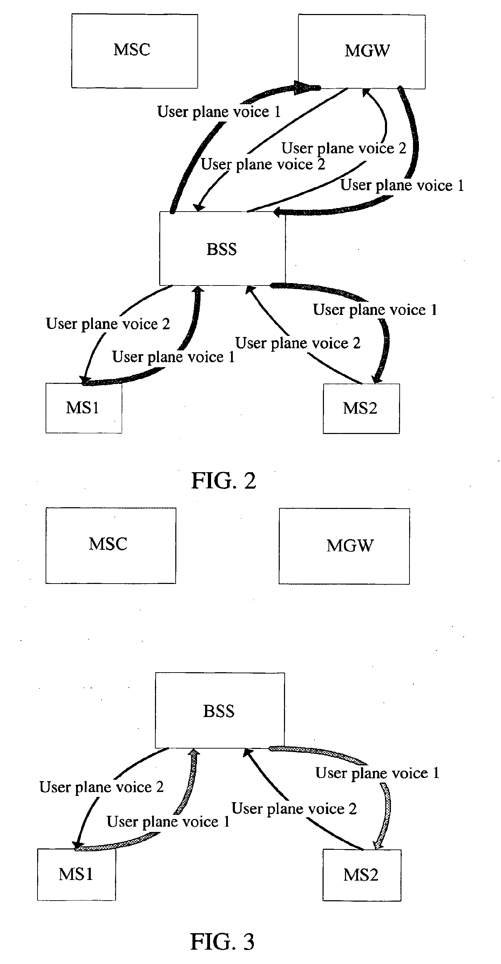

At present, in the GSM system, for the ongoing call, the user plane voice of one call party will be transmitted to the Media Gateway (MGW) by the BSC through the A interface, and then transmitted to the BSC of the other call party by the MGW, although both of the call parties are located in the same BSC. However, in a practical GSM system, there is a large quantity of local call cases, and said local call refers that both of the call parties are belonging to the same BTS, or belonging to different BTSs in the same BTS cluster (the BTSs in the same BTS cluster belonging to one BSC), or belonging to the same BSC. For these local calls, if the current call process flow is used, then:
1) for the call belonging to the same BTS, a case of the user plane voice of one call party being transmitted to the BSC through the Abis interface of the BTS, and the BSC transmitting this user plane voice to the MGW, and the MGW further transmitting the user plane voice to the original BSC and the original BSC transmitting this user plane voice to the original BTS exists, which causes the waste of transmitting resources of the Abis interface and the A interface;
2) for the call belonging to different BTSs in the same BTS cluster, a case of the user plane voice of one call party being transmitted to the control BTS of this BTS cluster through the Abis interface of the BTS, the control BTS of this BTS cluster further transmitting this user plane voice to the BSC through its Abis interface, the BSC further transmitting the user plane voice to the MGW, the MGW further transmitting the user plane voice to the original BSC, the original BSC further transmitting this user plane voice to the control BTS of the original BTS cluster, and the control BTS of the original BTS cluster further transmitting this user plane voice to the original BTS exists, which causes the waste of transmitting resources of the Abis interface between BSC and the control BTS of the BTS cluster, and at the same time, transmitting resources of the A interface are also wasted;
3) for the call belonging to the same BSC, a case of the BSC transmitting the user plane voice to the MGW at first and MGW further transmitting the user plane voice to the original BSC exists, which causes the waste of transmitting resources of the A interface. As shown in FIG. 2, a user plane voice 1 sent by the MS1 is sent to the MGW in the core network by the BSS, and then is returned to the BSS by the MGW, and then is sent to the MS2 by the BSS; a user plane voice 2 sent by the MS2 is similar.

An example of prior art method is described in Huawei Technology Co Ltd: "1.1 Requirement Background", 3GPP Draft; GP-090077 The proposed mechanism for local swtch, 3rd Generation partnership project (3GPP), Mobile competence center; 650, Route Des Lucioles; F-06921 Sphia-antipolis Cedex; France, Vol. TSG GERAN, no. St Julians, Malta; 20090216-20090220, 12, February 2009, Xp050594356, Relevant technologies are also known from "3rd Generation Partnership Project; Technical Specification Group GSW/EDGE Radio Access Network; Mobile Switching Centre-Base Station System(MCS-BSS) interface; Layer 3 specification(Release 8); 3GPP TS 48.008 V8.6.0", 1 February 2009, Xp 055079244; WO00/48417A1, EP 1148753A2 and China Mobile et al, 3GPP Draft; GP-090076 Draft work item description on local switch, 3rd Generation Partnership Project(3GPP), Mobile Competence Centre; 650, Route Des Lucioles; F-06921 Sophia-antipolis Cedex; France, Vol TSG GERAN, no. St Julians, Malta; 20090216-20090220, 12 February 2009, Xp05050594335.

### Summary of the Invention

The technical problem to be solved in the present invention is to overcome the drawbacks of the prior art, and to provide a call handover method between BSSs and a mobile communication system, which are able to avoid the waste of the transmitting resources of the Abis interface and the A interface as defined in the attached independent claims.

In order to solve the above technical problem, the present invention provides a call handover method between base station systems, comprising:
after receiving a handover required message sent by a source Base Station Controller (BSC), a Mobile Switching Center (MSC) judging whether a first call corresponding to this message after handover forms a local call with a second call, and if yes, sending a handover request message including a local call identifier to a destination BSC; said local call identifier being used for identifying said second call;
after receiving said handover request message, the destination BSC establishing an internal channel for transmitting a user plane voice of said first call and second call between users of said first call and second call without passing through a core network according to said local call identifier; and
after receiving a handover detect message sent by a destination Base Transceiver Station (BTS), the destination BSC using said internal channel to transmit the user plane voice of said first call and second call.

Furthermore, the above method further has following characteristics:
said local call identifier includes: a circuit identity codec of said second call, or a call identifier of said second call.

Furthermore, the above method further has following characteristics:
the step of said destination BSC establishing said internal channel comprises:
   said destination BSC selecting a voice encoding mode for said first call, and comparing the voice encoding modes of said first call and said second call:
      if said voice encoding modes of said first call and said second call are compatible, said destination BSC establishing said internal channel for directly transmitting the user plane voice of said first call and second call between the users of said first call and second call;
      if said voice encoding modes of said first call and said second call are not compatible and said destination BSC comprises a trans-coder, configuring the trans-coder for converting the voice encoding mode of said first call or said second call in said internal channel.

Furthermore, the above method further has following characteristics:
after said destination BSC establishes said internal channel and before receiving said handover detect message, the method further comprises:
   said destination BSC judging whether said internal channel is allowed to be used to transmit the user plane voice of said first call and second call according to a current state of said second call, and only when a judgment result is allowable, using said internal channel to transmit the user plane voice of said first call and second call.

Furthermore, the above method further has following characteristics:
in the step of judging whether said internal channel is allowed to be used to transmit the user plane voice of said first call and second call,
when the current state of said second call is ongoing handover, said destination BSC judges that said internal channel is not allowed to be used to transmit the user plane voice of said first call and second call.

Furthermore, the above method further has following characteristics:
in the step of judging whether said internal channel is allowed to be used to transmit the user plane voice of said first call and second call, if said judgment result is that said internal channel is allowed to be used to transmit the user plane voice of said first call and second call, said method further comprises:
   after receiving a handover complete message sent by said destination BTS, said destination BSC removing a connection of the first call and the second call for transmitting the user plane voice in A interface, and notifying said MSC of removing the connection of the first call and the second call for transmitting the user plane voice in A interface.

Furthermore, the above method further has following characteristics:
in the step of notifying said MSC of removing the connection, said BSC notifies said MSC of removing the connection of the first call and the second call for transmitting the user plane voice in A interface by including a local call local switch indicator in the handover complete message; and
said local call local switch indicator is used for identifying whether said internal channel has been used to transmit the user plane voice of said first call and second call.

Furthermore, the above method further has following characteristics:
in the step of said MSC sending the handover request message to the destination BSC, said MSC includes a local switch indicator in said handover request message, and this indicator is used for notifying whether said internal channel is expected to be used to transmit the user plane voice of said first call and second call.
In order to solve the above technical problem, the present invention also provides a Base Station Controller (BSC), comprises a sending message module and an establishing internal channel module, wherein
said sending message module is configure to: when said BSC acts as a source BSC, send a handover required message so that a Mobile Switching Center (MSC) sends a handover request message including a local call identifier to said destination BSC after receiving said handover required message sent by said source BSC, and said local call identifier is used for identifying a second call;
said establishing internal channel module is configured to: when said BSC acts as a destination BSC, establish an internal channel for transmitting a user plane voice of a first call and said second call between users of said first call and second call without passing through a core network according to said local call identifier after this destination BSC receives the handover request message sent by the MSC, and use said internal channel to transmit the user plane voice of said first call and second call after receiving a handover detect message sent by a destination Base Transceiver Station (BTS).

Furthermore, the above BSC further has following characteristics:
said establishing internal channel module is further configured to: when said BSC acts as a destination BSC, judge whether said internal channel is allowed to be used to transmit the user plane voice of said first call and second call according to a current state of said second call after said destination BSC establishes said internal channel and before receiving said handover detect message sent by said destination BTS, and only when a judgment result is allowable, use said internal channel to transmit the user plane voice of said first call and second call.

In order to solve the above technical problem, the present invention also provides a base station system, which comprises the above BSCs acting as the source BSC and the destination BSC.

In order to solve the above technical problem, the present invention provides a mobile communication system, comprising a source base station system, a destination base station system and a MSC; said source base station system comprising a source BSC, said destination base station system comprising a destination BSC and a destination BTS, wherein
said MSC is configured to after receiving a handover required message sent by said source BSC, judge whether a first call corresponding to this message after handover forms a local call with a second call, and if yes, send a handover request message including a local call identifier to said destination BSC; said local call identifier is used for identifying said second call;
said destination BSC is configured to establish an internal channel for transmitting a user plane voice of said first call and second call between users of said first call and second call without passing through a core network according to said local call identifier after receiving said handover request message, and use said internal channel to transmit the user plane voice of said first call and second call after receiving a handover detect message sent by said destination BTS.

Furthermore, the above system further has following characteristics:
said BSC is further configured to: when said BSC acts as a destination BSC, judge whether said internal channel is allowed to be used to transmit the user plane voice of said first call and second call according to a current state of said second call after said destination BSC establishes said internal channel and before receiving said handover detect message sent by said destination BTS, and only when a judgment result is allowable, use said internal channel to transmit the user plane voice of said first call and second call.

As a conclusion, by using the method and the system of the present invention, the user plane voice forming the calling of a local call can be directly transmitted without passing through the MGW of the core network after completing the call handover between the BSSs by establishing the internal channel for transmitting the user plane voice without passing through the core network between the BSSs, and the waste of the transmitting resources of the Abis interface and the A interface is avoided.

### Brief Description of Drawings

FIG. 1 is a flow chart of the call handover between BSSs (including the BSC and the BTS) in the current GSM system;
FIG. 2 is a schematic diagram of transmitting the user plane voice among the mobile terminal, the BSC and the MGW for the local call belonging to the same BSC in the prior art;
FIG. 3 is a schematic diagram of transmitting the user plane voice between the mobile terminals and the BSC for the local call belonging to the same BSC after carrying out the local switch;
FIG. 4 is a flow chart of the handover between the BSSs (including the BSC and the BTS) in the GSM system according to the example of the present invention;
FIG. 5 is a schematic diagram of a type of data structures of the local call identifier according to the example of the present invention;
FIG. 6 is a schematic diagram of a type of structures of the indicator according to the example of the present invention.

### Preferred Embodiments of the Present Invention

The core concept of the present invention is: the BSS (including the BSC and the BTS) implementing the Local Call Local Switch (LCSL) function, namely directly sending the user plane voice of one party of the local call to the other party without passing through the MGW of the core network, and as shown in FIG. 3, after the user plane voice 1 sent by the MS1 arrives at the BSS, the BSS directly sends the user plane voice 1 to the MS2 without passing through the MGW of the core network; the user plane voice 2 sent by the MS2 is similar.

Below it will briefly describe each network element entity in the mobile communication system (for example the GSM system) which is able to implement the local call local switch function in the example of the present invention; the connection relationship of various network element entities (namely the message interaction relationship) will be described in detail when describing the method of the present invention subsequently.

The GSM system of the present invention comprises: the BSS1 (the source BSS), the BSS2 (the destination BSS) and the MSC; the BSS1 comprises the BTS1 (the source BTS) and the BSC1 (the source BSC); and the BSS2 comprises the BTS2 (the destination BTS) and the BSC2 (the destination BSC).

Specifically, besides completing functions defined in the current protocol, when the MSC carries out the call handover between the BSSs (handover from the BSS1 to the BSS2), the MSC obtains the handover destination BSC (BSC2) according to the Handover Required message sent to the MSC by the source BSC (BSC1), and the MSC judges whether the call after the handover forms the local call, and if the MSC detects that the call after the handover forms the local call, the Handover Request message sent to the destination BSC includes the identifier identifying the local call (which is called as the local call identifier in the following), and this identifier is used for notifying the handover destination BSC that the handover call (which could be called as the first call) forms the local call with which call (which could be called as the second call) under this BSC after the handover.

After receiving the Handover Request message, the destination BSC (BSC2) learns that the call (the first call) which will carry out the handover to this BSC forms the local call with which call (the second call) serving under this BSC after the handover according to the local call identifier in the Handover Request message. The handover destination BSC establishes the internal channel for the local call local switch of these two calls, and this internal channel can be established inside one BTS, and also can be established inside one BTS cluster, and also can be established inside one BSC.

After completing the establishment of the internal channel for the local call local switch, the destination BSC (BSC2) adds a local call connection completion indicator into the Handover Request Acknowledgement message responded to the MSC. This indicator is used for notifying the MSC that the handover call (the first call) will use the local call local switch function after carrying out the handover into the destination BSC.

After the destination BSC (BSC2) and the MSC completing the handover, the local call local switch function is used, and at the same time, the connection between the BSC and the MGW of the first call and the second call is removed.

As a conclusion, the BSC in the example of the present invention comprises: a sending message module and an establishing internal channel module, wherein
said sending message module is configured to: when said BSC acts as a source BSC, send a Handover Required message, so that after receiving the Handover Required message sent by said source BSC, when the Mobile Switching Center (MSC) judges that the first call corresponding to this message after the handover forms a local call with the second call, the MSC sends a Handover Request message including the local call identifier to said destination BSC, and said local call identifier is used for identifying said second call;
said establishing internal channel module is configured to: when said BSC acts as a destination BSC, establish an internal channel which is used for transmitting the user plane voice of said first call and second call between the users of said first call and second call without passing through the core network according to said local call identifier after this destination BSC receives the Handover Request message sent by the MSC, and use said internal channel to transmit the user plane voice of said first call and second call after receiving the Handover Detect message sent by the destination Base Transceiver Station (BTS).

Preferably, said establishing internal channel module is also configured to: when said BSC acts as a destination BSC, judge whether said internal channel is allowed to be used to transmit the user plane voice of said first call and second call according to the current state of said second call after this destination BSC establishes said internal channel and before receiving said Handover Detect message sent by said destination BTS, and only when the judgment result is allowable, use said internal channel to transmit the user plane voice of said first call and second call.

Below it will describe the method of the present invention and the message interaction relationship of above various network elements in detail in combination with figures and examples.

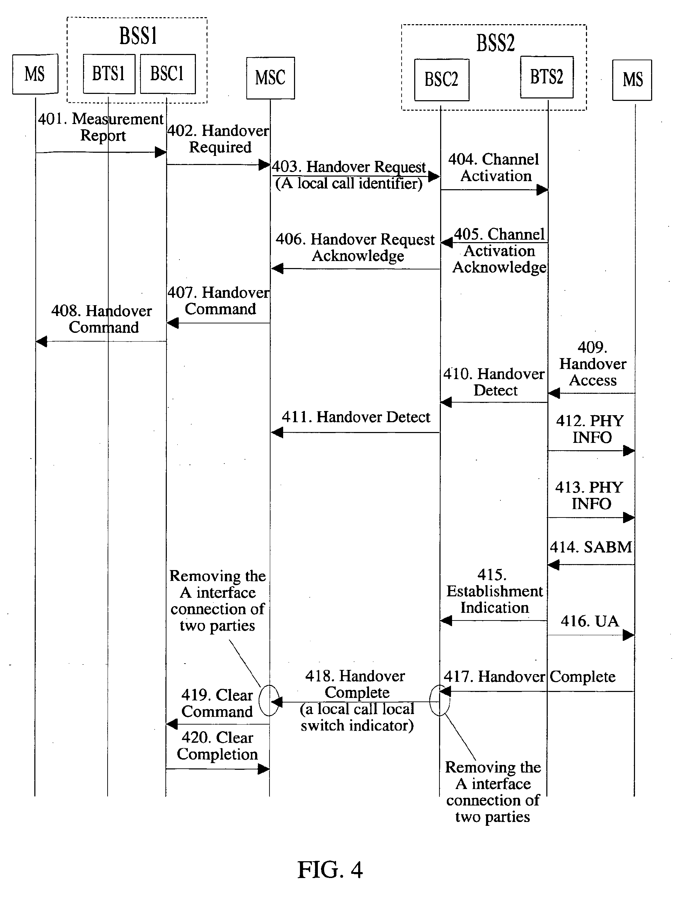

FIG. 4 is a flow chart of the handover between the BSSs (including the BSC and the BTS) in the GSM system according to the example of the present invention, and as shown in FIG. 4, this flow comprises following steps:
401~402: the same with 101~102;
403: the MSC sends a Handover Request message to the handover destination BSC (BSC2);
in the handover process, after receiving the Handover Required message sent by the handover source BSC (BSC1), the MSC judges whether the call (the first call) corresponding to this message after the handover forms the local call with a certain call (the second call) in the BSC2 (the specific judgment algorithm belongs to the prior art); and if yes, the MSC adds the local call identifier into the Handover Request message sent to the destination BSC. The local call identifier includes: a Circuit Identity Codec (CIC) of the other party call (the second call) which is able to form the local call with this call (the first call) which will carry out the handover or the Call Identifier (CI) of the other party call (the second call).

The above Circuit Identity Codec is the existing circuit identifier (which is used for identifying the call of the A interface born on the TDM Transport) in the protocol; the above Call Identifier is the existing Call ID (which is used for identifying the call of the A interface born on the IP Transport) in the protocol. When a call is established, the MSC will send the above identifier to the BSC by an assignment message.

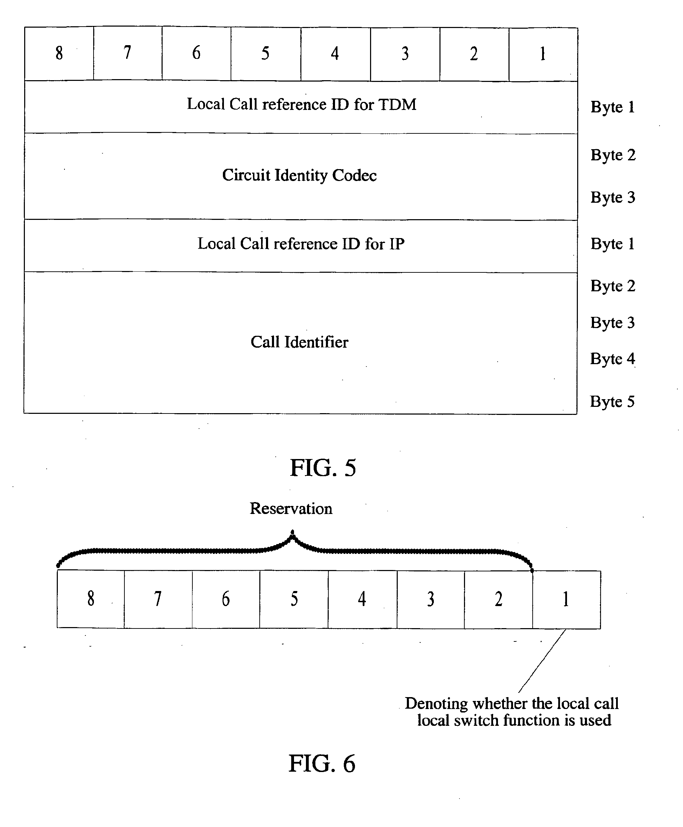

Preferably, the local call identifier can be included in the data structure shown in FIG. 5, and this data structure is composed of two parts of the Local Call reference ID for TDM and the Local Call reference ID for IP, and the CIC is included in the part of the Local Call reference ID for TDM, and the CI is included in the part of the Local Call reference ID for IP. When the other party of the local call is transmitted based on TDM in the A interface, the part of the Local Call reference ID for TDM is used to include the CIC value, and the CI value of the part of the Local Call reference ID for IP can be empty; when the other party of the local call is transmitted based on IP in the A interface, the part of the Local Call reference ID for IP is used to include the CI value, and the CIC value of the part of the Local Call reference ID for TDM can be empty, wherein the expression methods of the Circuit Identity Codec and the Call Identifier are the prior art.

Optionally, in order to clearly notify the BSC whether it is expected to use the local switch function for this local call, the MSC can add a local switch indicator in the Handover Request message sent to the BSC, and this indicator is used for notifying the BSC whether the local switch function is used for this local call. This indicator can use the format shown in FIG. 6, wherein the local switch indicator occupies 8 bits, the lower bit 1 is used to indicate whether to implement the local switch in the handover process, and other bits can be reserved. The values of the bit 1 are shown in table 1:

**Table 1**

| | |
|---|---|
| Bit 1=1 | It is expected to use the local call local switch function |
| Bit 1=0 | It is not expected to use the local call local switch function |

404, the BSC 2 sends a Channel Activation message to the BTS2 of the destination cell;
besides, after the BSC2 receives the Handover Request message, if the Handover Request message includes the local call identifier, the BSC2 learns that this call forms the local call with the call identified by said local call identifier after the handover, and thus besides completing the wireless channel preparation, the BSC2 further directly establishes the internal channel for transmitting the user plane voice of this local call inside the BSS instead of establishing the connection channel with the MGW.

When the above internal channel is established, after selecting the voice encoding mode for the handover call, the BSC compares the selected voice encoding mode with the voice encoding mode of the other party of the call. At this time, 6 cases will occur, as shown in table 2:

**Table 2**

| | Whether the codecs of the two call parties are compatible | Whether the BSC has the TC | Whether the MSC has the TC | Whether the LCLS can be implemented (using the TC) | Whether the LCLS can be implemented (without using the TC) |
|---|---|---|---|---|---|
| 1 | Y | Y | Y | Y | Y |
| 2 | Y | Y | N | Y | Y |
| 3 | Y | N | Y | without TC | Y |
| 4 | N | Y | Y | Y | N |
| 5 | N | Y | N | Y | N |
| 6 | N | N | Y | N | N |

When the 1st, 2nd and 3rd cases occur, namely in the case of the codecs of two call parties being compatible, and when the BSC2 establishes the internal channel, it establishes the transmitting channel (the internal channel) of directly transmitting the user plane voice of the two call parties, namely directly transmitting the user plane voice of one call party to the other call party.

When the 4th and 5th cases occur, namely in the case of the codecs of two call parties not being compatible, the internal channel is required to configure the Trans-coder (TC); when the BSC uses the internal channel, the BSC is required to convert the received voice encoding of one call party into the voice encoding mode compatible with the other party by the TC, namely, the user plane voice of one call party is transmitted to the TC inside the BSS by the internal channel at first, and the TC converts the received user plane voice into the encoding mode compatible with the other party, and then transmits the user plane voice to the other call party.

When the 6th case occurs, the local call local switch function will be unable to be used.
405: the BTS2 returns a Channel Activation Acknowledge (Channel Activation ACK) message to the BSC2;
406: the BSC2 sends a Handover Request Acknowledge message to the MSC;
407∼417: the same with steps of 107∼117;
besides, the BSC2 can judge whether the local call formed by the first call and the second call can use the local switch according to the current state of the second call after completing the establishment of the internal channel and before receiving the Handover Detect message of step 410.

Particularly, when the current state of the second call is the ongoing handover, the local call local switch function is unable to be used.

If the result of the above judgment is that the local switch function can't be used, then the BSC2 deletes the established internal channel.
418: after receiving the Handover Complete message sent by the MS through the BTS2, the BSC2 sends the Handover Complete message to the MSC;
if the result of the above judgment is that the call with the local call local switch function can be used after the handover, the handover destination BSC (BSC2) removes the connection of the first call and the second call for transmitting the user plane voice in the A interface after receiving the Handover Complete message sent by the MS through the BTS2; correspondingly, when the MSC receives the Handover Complete message sent by the BSC2, the connection of the first call and the second call for transmitting the user plane voice in the A interface is removed.

Besides, in step 418, in order to enable the MSC to clearly learn whether said internal channel has been used and to further learn whether the connection for transmitting the user plane voice between the MGW and the BSC of the first call and the second call requires removing after receiving the Handover Complete message, thus, the BSC2 adds a local call local switch indicator into said Handover Complete message sent by the BSC2 itself.

Preferably, the local call local switch indicator uses the format shown in FIG. 6, wherein the local call local switch indicator occupies 8 bits, the lower bit 1 is used to indicate the state of the local switch, and other bits can be reserved. Particularly, the bit 1 can be used to indicate whether the local call local switch function is used after the completion of handover, referring to table 3:

**Table 3**

| | |
|---|---|
| Bit 1=1 | The local call local switch function has been used |
| Bit 1=0 | The local call local switch function has not been used |

i.e. when the value of the bit 1 is 1, it denotes that this call has used the local switch function, and when the value of the bit 1 is 0, it denotes that this call has not used the local switch function.
419 ∼ 420: the same with steps of 119∼120.

Although the present invention is described in combination with specific examples, the person skilled in the art can make modifications and transformations without departing from the spirit or scope of the present invention. All such modifications and transformations shall all be considered within the scope of the present invention and the scope of the appended claims.

### Industrial Applicability

The present invention provides a call handover method between base station systems, a BSC, a base station system and a mobile communication system, and the user plane voice forming the calling of a local call can be directly transmitted without passing through the MGW of the core network after completing the call handover between the BSSs by establishing the internal channel for transmitting the user plane voice without passing through the core network between the BSSs, and the waste of transmitting resources of the Abis interface and the A interface is avoided.

## Claims

1. A call handover method between base station systems, **characterized in that**:
after receiving a handover required message (402) sent by a source Base Station Controller, BSC, a Mobile Switching Center, MSC, judging whether a first call corresponding to this message forms a local call with a second call after handover, and if yes, sending a handover request message(403) including a local call identifier to a destination BSC; said local call identifier being used for identifying said second call;
after receiving said handover request message(403), the destination BSC establishing an internal channel for transmitting a user plane voice of said first call and second call between users of said first call and second call without passing through a core network according to said local call identifier; and
after receiving a handover detect message(410) sent by a destination Base Transceiver Station, BTS, the destination BSC using said internal channel to transmit the user plane voice of said first call and second call;
wherein said local call identifier includes a circuit identity codec of said second call or a call identifier of said second call.

2. The method as claimed in claim 1, wherein the step of said destination BSC establishing said internal channel comprises:
said destination BSC selecting a voice encoding mode for said first call, and comparing the voice encoding modes of said first call and said second call:
if said voice encoding modes of said first call and said second call are compatible, said destination BSC establishing said internal channel for directly transmitting the user plane voice of said first call and second call between the users of said first call and second call;
if said voice encoding modes of said first call and said second call are not compatible and said destination BSC comprises a trans-coder, configuring the trans-coder for converting the voice encoding mode of said first call or said second call in said internal channel.

3. The method as claimed in claim 1, wherein
after said destination BSC establishes said internal channel and before receiving said handover detect message(410), further comprises:
said destination BSC judging whether said internal channel is allowed to be used to transmit the user plane voice of said first call and second call according to a current state of said second call, and only when a judgment result is allowable, using said internal channel to transmit the user plane voice of said first call and second call.

4. The method as claimed in claim 3, wherein
in the step of judging whether said internal channel is allowed to be used to transmit the user plane voice of said first call and second call,
when the current state of said second call is ongoing handover, said destination BSC judges that said internal channel is not allowed to be used to transmit the user plane voice of said first call and second call.

5. The method as claimed in claim 3, wherein
in the step of judging whether said internal channel is allowed to be used to transmit the user plane voice of said first call and second call, if said judgment result is that said internal channel is allowed to be used to transmit the user plane voice of said first call and second call, said method further comprises:
after receiving a handover complete message (418) sent by said destination BTS, said destination BSC removing a connection of the first call and the second call for transmitting the user plane voice in A interface, and notifying said MSC of removing the connection of the first call and the second call for transmitting the user plane voice in the A interface.

6. The method as claimed in claim 5, wherein
in the step of notifying said MSC of removing the connection, said BSC notifies said MSC of removing the connection of the first call and the second call for transmitting the user plane voice in the A interface by including a local call local switch indicator in the handover complete message(418); and
said local call local switch indicator is used for identifying whether said internal channel has been used to transmit the user plane voice of said first call and second call.

7. The method as claimed in any one of claims 1 to 6, wherein
in the step of said MSC sending the handover request message(403) to the destination BSC, said MSC includes a local switch indicator in said handover request message(403), and this indicator is used for notifying whether said internal channel is expected to be used to transmit the user plane voice of said first call and second call.

8. A Base Station Controller, BSC, comprising a sending message module and an establishing internal channel module, **characterized in that**
said sending message module is configure to: when said BSC acts as a source BSC, send a handover required message(402) to a Mobile Switching Center, MSC so that the MSC sends a handover request message(403) including a local call identifier to a destination BSC after the MSC receiving said handover required message(402), and said local call identifier is used for identifying a second call;
said establishing internal channel module is configured to: when said BSC acts as a destination BSC, establish an internal channel for transmitting a user plane voice of a first call and said second call between users of said first call and second call without passing through a core network according to said local call identifier after the destination BSC receives the handover request message (403)sent by the MSC, and use said internal channel to transmit the user plane voice of said first call and said second call after receiving a handover detect message (410) sent by a destination Base Transceiver Station , BTS;
wherein said local call identifier includes a circuit identity codec of said second call or a call identifier of said second call.

9. The BSC as claimed in claim 8, wherein
said establishing internal channel module is further configured to: when said BSC acts as a destination BSC, judge whether said internal channel is allowed to be used to transmit the user plane voice of said first call and second call according to a current state of said second call after said destination BSC establishes said internal channel and before receiving said handover detect message (410) sent by said destination BTS, and only when a judgment result is allowable, use said internal channel to transmit the user plane voice of said first call and second call.

10. A base station system, which comprises said BSC as claimed in claim 8 or 9 acting as the source BSC and the destination BSC.

11. A mobile communication system, comprising a source base station system, a destination base station system and a MSC; said source base station system comprising a source BSC, said destination base station system comprising a destination BSC and a destination BTS, the mobile communication system being **characterized in that**:
said MSC is configured to after receiving a handover required message(402) sent by said source BSC, judge whether a first call corresponding to this message forms a local call with a second call after handover, and if yes, send a handover request message(403) including a local call identifier to said destination BSC; said local call identifier is used for identifying said second call;
said destination BSC is configured to establish an internal channel for transmitting a user plane voice of said first call and second call between users of said first call and second call without passing through a core network according to said local call identifier after receiving said handover request message(403), and use said internal channel to transmit the user plane voice of said first call and second call after receiving a handover detect message(410) sent by said destination BTS;
wherein said local call identifier includes a circuit identity codec of said second call or a call identifier of said second call.

12. The system as claimed in claim 11, wherein
said destination BSC is further configured to: judge whether said internal channel is allowed to be used to transmit the user plane voice of said first call and second call according to a current state of said second call after said destination BSC establishes said internal channel and before receiving said handover detect message (410) sent by said destination BTS, and only when a judgment result is allowable, use said internal channel to transmit the user plane voice of said first call and second call.

## Patentansprüche

1. Anrufübergabeverfahren zwischen Basisstationssystemen, **dadurch gekennzeichnet, dass**:
eine Mobilfunkvermittlungsstelle, MSC, nach dem Empfangen einer durch eine Quell-Basisstationssteuerung, Quell-BSC, gesendeten "Übergabe-erforderlich"-Nachricht (402) beurteilt, ob ein erster Anruf, der dieser Nachricht entspricht, nach der Übergabe einen lokalen Anruf mit einem zweiten Anruf bildet, und falls ja, eine Übergabeanforderungsnachricht (403), die eine lokale Anrufkennung enthält, zu einer Ziel-BSC sendet; wobei die lokale Anrufkennung zum Identifizieren des zweiten Anrufs verwendet wird;
die Ziel-BSC nach dem Empfangen der Übergabeanforderungsnachricht (403) einen internen Kanal zum Senden einer Anwenderebenensprache des ersten Anrufs und des zweiten Anrufs zwischen Anwendern des ersten Anrufs und des zweiten Anrufs aufbaut, ohne durch ein Kernnetz hindurchzutreten, gemäß der lokalen Anrufkennung; und
die Ziel-BSC nach dem Empfangen einer durch die Ziel-Basissender-/Empfängerstation, Ziel-BTS, gesendeten Übergabedetektionsnachricht (410) den internen Kanal verwendet, um die Anwenderebenensprache des ersten Anrufs und des zweiten Anrufs zu senden;
wobei die lokale Anrufkennung einen Leitungsidentitäts-Codec der zweiten Anrufkennung oder eine Anrufkennung des zweiten Anrufs enthält.

2. Verfahren nach Anspruch 1, wobei der Schritt, in dem die Ziel-BSC den internen Kanal aufbaut, Folgendes umfasst:
die Ziel-BSC wählt einen Sprachcodierungsmodus für den ersten Anruf aus und vergleicht die Sprachcodierungsmodi des ersten Anrufs und des zweiten Anrufs:
falls die Sprachcodierungsmodi des ersten Anrufs und des zweiten Anrufs kompatibel sind, baut die Ziel-BSC den internen Kanal zum direkten Senden der Anwenderebenensprache des ersten Anrufs und des zweiten Anrufs zwischen den Anwendern des ersten Anrufs und des zweiten Anrufs auf;
falls die Sprachcodierungsmodi des ersten Anrufs und des zweiten Anrufs nicht kompatibel sind und die Ziel-BSC einen Transcodierer umfasst, Konfigurieren des Transcodierers zum Umsetzen des Sprachcodierungsmodus des ersten Anrufs oder des zweiten Anrufs in dem internen Kanal.

3. Verfahren nach Anspruch 1, wobei
das Verfahren, nachdem die Ziel-BSC den internen Kanal aufgebaut hat und bevor sie die Übergabedetektionsnachricht (410) empfängt, ferner Folgendes umfasst:
die Ziel-BSC beurteilt, ob der interne Kanal verwendet werden darf, um die Anwenderebenensprache des ersten Anrufs und des zweiten Anrufs zu senden, gemäß einem aktuellen Zustand des zweiten Anrufs, wobei sie nur dann, wenn ein Beurteilungsergebnis zulässig ist, den internen Kanal zum Senden der Anwenderebenensprache des ersten Anrufs und des zweiten Anrufs verwendet.

4. Verfahren nach Anspruch 3, wobei
in dem Schritt des Beurteilens, ob der interne Kanal verwendet werden darf, um die Anwenderebenensprache des ersten Anrufs und des zweiten Anrufs zu senden,
die Ziel-BSC, wenn der aktuelle Zustand des zweiten Anrufs eine gerade stattfindende Übergabe ist, beurteilt, dass der interne Kanal nicht verwendet werden darf, um die Anwenderebenensprache des ersten Anrufs und des zweiten Anrufs zu senden.

5. Verfahren nach Anspruch 3, wobei
das Verfahren in dem Schritt des Beurteilens, ob der interne Kanal verwendet werden darf, um die Anwenderebenensprache des ersten Anrufs und des zweiten Anrufs zu senden, falls das Beurteilungsergebnis ist, dass der interne Kanal verwendet werden darf, um die Anwenderebenensprache des ersten Anrufs und des zweiten Anrufs zu senden, ferner Folgendes umfasst:
die Ziel-BSC nach dem Empfangen einer durch die Ziel-BTS gesendeten Übergabefertigstellungsnachricht (418) eine Verbindung des ersten Anrufs und des zweiten Anrufs zum Senden der Anwenderebenensprache aus der A-Schnittstelle entfernt und der MSC das Entfernen der Verbindung des ersten Anrufs und des zweiten Anrufs zum Senden der Anwenderebenensprache auf der A-Schnittstelle meldet.

6. Verfahren nach Anspruch 5, wobei
die BSC in dem Schritt des Meldens an die MSC des Entfernens der Verbindung der MSC das Entfernen der Verbindung des ersten Anrufs und des zweiten Anrufs zum Senden der Anwenderebenensprache auf der A-Schnittstelle durch Aufnehmen eines "lokaler-Anruflokale-Vermittlungsstelle"-Kennzeichens in die Übergabefertigstellungsnachricht (418) meldet; und
das "lokaler-Anruf-lokale-Vermittlungsstelle"-Kennzeichen zum Identifizieren verwendet wird, ob der interne Kanal verwendet worden ist, um die Anwenderebenensprache des ersten Anrufs und des zweiten Anrufs zu senden.

7. Verfahren nach einem der Ansprüche 1 bis 6, wobei
in dem Schritt, dass die MSC die Übergabeanforderungsnachricht (403) zu der Ziel-BSC, sendet, die MSC ein lokales Vermittlungsstellenkennzeichen in die Übergabeanforderungsnachricht (403) aufnimmt, und dieses Kennzeichen zum Melden verwendet wird, ob erwartet wird, dass der interne Kanal verwendet wird, um die Anwenderebenensprache des ersten Anrufs und des zweiten Anrufs zu senden.

8. Basisstationssteuerung, BSC, die ein Nachrichtensendemodul und ein Aufbaumodul für einen internen Kanal umfasst, **dadurch gekennzeichnet, dass**
das Nachrichtensendemodul konfiguriert ist: dann, wenn die BSC als eine Quell-BSC arbeitet, eine "Übergabe-erforderlich"-Nachricht (402) zu einer Mobilfunkvermittlungsstelle, MSC, zu senden, so dass die MSC eine Übergabeanforderungsnachricht (403), die eine lokale Anrufkennung enthält, zu einer Ziel-BSC sendet, nachdem die MSC die "Übergabe-erforderlich"-Nachricht (402) empfangen hat, und die lokale Anrufkennung verwendet wird, um einen zweiten Anruf zu identifizieren;
das Aufbaumodul für einen internen Kanal konfiguriert ist: dann, wenn die BSC als eine Ziel-BSC arbeitet, einen internen Kanal zum Senden einer Anwenderebenensprache eines ersten Anrufs und eines zweiten Anrufs zwischen Anwendern des ersten Anrufs und des zweiten Anrufs aufzubauen, ohne durch ein Kernnetz hindurchzutreten, gemäß der lokalen Anrufkennung, nachdem die Ziel-BSC die durch die MSC gesendete Übergabeanforderungsnachricht (403) empfängt, und den internen Kanal zu verwenden, um die Anwenderebenensprache des ersten Anrufs und des zweiten Anrufs nach dem Empfangen einer durch eine Ziel-Basis-Sender-/Empfängerstation, BTS, gesendeten Übergabedetektionsnachricht (410) zu senden;
wobei die lokale Anrufkennung einen Leitungskennzeichen-Codec des zweiten Anrufs oder eine Anrufkennung des zweiten Anrufs enthält.

9. BSC nach Anspruch 8, wobei
das Aufbaumodul für einen internen Kanal ferner konfiguriert ist: dann, wenn die BSC als Ziel-BSC arbeitet, gemäß einem aktuellen Zustand des zweiten Anrufs zu beurteilen, ob der interne Kanal verwendet werden darf, um die Anwenderebenensprache des ersten Anrufs und des zweiten Anrufs zu senden, nachdem die Ziel-BSC den internen Kanal aufgebaut hat und bevor sie die durch die Ziel-BTS gesendete Übergabedetektionsnachricht (410) empfängt, und nur dann, wenn ein Beurteilungsergebnis zulässig ist, den internen Kanal zu verwenden, um die Anwenderebenensprache des ersten Anrufs und des zweiten Anrufs zu senden.

10. Basisstationssystem, das die BSC nach Anspruch 8 oder 9, die als die Quell-BSC und die Ziel-BSC arbeitet, umfasst.

11. Mobilkommunikationssystem, das ein Quell-Basisstationssystem, ein Ziel-Basisstationssystem und eine MSC umfasst; wobei das Quell-Basisstationssystem eine Quell-BSC umfasst, das Ziel-Basisstationssystem eine Ziel-BSC und eine Ziel-BTS umfasst, wobei das Mobilkommunikationssystem **dadurch gekennzeichnet ist, dass**:
die MSC konfiguriert ist, nach dem Empfangen einer durch die Quell-BSC gesendeten "Übergabe-erforderlich"-Nachricht (402) zu beurteilen, ob ein erster Anruf, der dieser Nachricht entspricht, nach der Übergabe einen lokalen Anruf mit einem zweiten Anruf bildet, und falls ja, eine Übergabeanforderungsnachricht (403), die eine lokale Anrufkennung enthält, zu der Ziel-BSC zu senden; wobei die lokale Anrufkennung zum Identifizieren des zweiten Anrufs verwendet wird;
dann, wenn die Ziel-BSC konfiguriert ist, gemäß der lokalen Anrufkennung nach dem Empfangen der Übergabeanforderungsnachricht (403) einen internen Kanal zum Senden einer Anwenderebenensprache des ersten Anrufs und des zweiten Anrufs zwischen Anwendern des ersten Anrufs und des zweiten Anrufs aufzubauen, ohne durch ein Kernnetz hindurchzutreten, und den internen Kanal zu verwenden, um die Anwenderebenensprache des ersten Anrufs und des zweiten Anrufs nach dem Empfangen einer durch die Ziel-BTS gesendeten Übergabedetektionsnachricht (410) zu senden;
wobei die lokale Anrufkennung einen Leitungskennzeichen-Codec des zweiten Anrufs oder eine Anrufkennung des zweiten Anrufs enthält.

12. System nach Anspruch 11, wobei
die Ziel-BSC ferner konfiguriert ist: gemäß einem aktuellen Zustand des zweiten Anrufs zu beurteilen, ob der interne Kanal verwendet werden darf, um die Anwenderebenensprache des ersten Anrufs und des zweiten Anrufs zu senden, nachdem die Ziel-BSC den internen Kanal aufgebaut hat und bevor sie die durch die Ziel-BTS gesendete Übergabedetektionsnachricht (410) empfängt, und nur dann, wenn ein Beurteilungsergebnis zulässig ist, den internen Kanal zu verwenden, um die Anwenderebenensprache des ersten Anrufs und des zweiten Anrufs zu senden.

## Revendications

1. Procédé de transfert d'appel entre des systèmes de stations de base, **caractérisé en ce que** :
après réception d'un message de transfert demandé (402) envoyé par un Contrôleur de Station de Base, BSC (Base Station Controller), de source, un Centre de Commutation Mobile, MSC (Mobile Switching Center), juge si un premier appel correspondant à ce message constitue un appel local avec un second appel après le transfert et si oui, envoie un message de demande de transfert (403) comprenant un identifiant d'appel local à un BSC de destination ; ledit identifiant d'appel local étant utilisé pour identifier ledit second appel ;
après réception dudit message de demande de transfert (403), le BSC de destination établit un canal interne pour transmettre une voix de plan utilisateur desdits premier appel et second appel entre des utilisateurs desdits premier appel et second appel sans passer par un coeur de réseau conformément audit identifiant d'appel local ; et
après réception d'un message de détection de transfert (410) envoyé par une Station d'Emission-Réception de Base, BTS (Base Transceiver Station), de destination,
le BSC de destination utilise ledit canal interne pour transmettre la voix du plan utilisateur desdits premier appel et second appel ;
dans lequel ledit identifiant d'appel local comprend un codec d'identité de circuit dudit second appel ou un identifiant d'appel dudit second appel.

2. Procédé selon la revendication 1, dans lequel l'étape d'établissement par ledit BSC de destination dudit canal interne comprend :
la sélection par ledit BSC de destination d'un mode de codage vocal pour ledit premier appel, et la comparaison par ledit BSC de destination des modes de codage vocaux dudit premier appel et dudit second appel :
si lesdits modes de codage vocaux dudit premier appel et dudit second appel sont compatibles, l'établissement par ledit BSC de destination dudit canal interne pour transmettre directement la voix du plan utilisateur desdits premier appel et second appel entre les utilisateurs desdits premier appel et second appel ;
si lesdits modes de codage vocaux dudit premier appel et dudit second appel ne sont pas compatibles et si ledit BSC de destination comprend un transcodeur, la configuration du transcodeur pour convertir le mode de codage vocal dudit premier appel ou dudit second appel en ledit canal interne.

3. Procédé selon la revendication 1, comprenant en outre :
après que ledit BSC de destination a établi ledit canal interne et avant réception dudit message de détection de transfert (410) :
le jugement par ledit BSC de destination du fait de savoir si ledit canal interne a l'autorisation d'être utilisé pour transmettre la voix du plan utilisateur desdits premier appel et second appel conformément à un état en cours dudit second appel, et l'utilisation, uniquement lorsqu'un résultat de jugement est admissible, dudit canal interne pour transmettre la voix du plan utilisateur desdits premier appel et second appel.

4. Procédé selon la revendication 3, dans lequel, lors de l'étape de jugement du fait de savoir si ledit canal interne a l'autorisation d'être utilisé pour transmettre la voix du plan utilisateur desdits premier appel et second appel,
lorsque l'état en cours dudit second appel est un transfert en cours, ledit BSC de destination juge que ledit canal interne n'a pas l'autorisation d'être utilisé pour transmettre la voix du plan utilisateur desdits premier appel et second appel.

5. Procédé selon la revendication 3, dans lequel, lors de l'étape de jugement du fait de savoir si ledit canal interne a l'autorisation d'être utilisé pour transmettre la voix du plan utilisateur desdits premier appel et second appel, si ledit résultat du jugement est que ledit canal interne a l'autorisation d'être utilisé pour transmettre la voix du plan utilisateur desdits premier appel et second appel, ledit procédé comprend en outre :
après réception d'un message de transfert achevé (418) envoyé par ladite BTS de destination, la suppression par ledit BSC de destination d'une connexion du premier appel et du second appel pour transmettre la voix du plan utilisateur dans une interface A, et la notification par ledit BSC de destination audit MSC de supprimer la connexion du premier appel et du second appel pour transmettre la voix du plan utilisateur dans l'interface A.

6. Procédé selon la revendication 5, dans lequel, lors de l'étape de notification audit MSC de supprimer la connexion, ledit BSC notifie audit MSC de supprimer la connexion du premier appel et du second appel pour transmettre la voix du plan utilisateur dans l'interface A en incluant un indicateur de commutateur local d'appel local dans le message de transfert achevé (418) ; et
ledit indicateur de commutateur local d'appel local est utilisé pour identifier si ledit canal interne a été utilisé pour transmettre la voix du plan utilisateur desdits premier appel et second appel.

7. Procédé selon l'une quelconque des revendications 1 à 6, dans lequel,
lors de l'étape lors de laquelle ledit MSC envoie le message de demande de transfert (403) au BSC de destination, ledit MSC inclut un indicateur de commutateur local dans ledit message de demande de transfert (403), et cet indicateur est utilisé pour notifier s'il est prévu d'utiliser ledit canal interne pour transmettre la voix du plan utilisateur desdits premier appel et second appel.

8. Contrôleur de Station de Base, BSC, comprenant un module d'envoi de message et un module d'établissement de canal interne, **caractérisé en ce que** :
ledit module d'envoi de message est configuré, lorsque ledit BSC joue le rôle de BSC de source, pour envoyer un message de transfert demandé (402) à un Centre de Commutation Mobile, MSC, de manière à ce que le MSC envoie un message de demande de transfert (403) comprenant un identifiant d'appel local à un BSC de destination après que le MSC a reçu ledit message de transfert demandé (402), et ledit identifiant d'appel local est utilisé pour identifier un second appel ;
ledit module d'établissement de canal interne est configuré, lorsque ledit BSC joue le rôle de BSC de destination, pour établir un canal interne pour transmettre une voix de plan utilisateur d'un premier appel et dudit second appel entre des utilisateurs desdits premier appel et second appel sans passer par un coeur de réseau conformément audit identifiant d'appel local après que le BSC de destination a reçu le message de demande de transfert (403) envoyé par le MSC, et utiliser ledit canal interne pour transmettre la voix du plan utilisateur dudit premier appel et second appel après réception d'un message de détection de transfert (410) envoyé par une Station d'Emission-Réception de Base, BTS, de destination ;
dans lequel ledit identifiant d'appel local comprend un codec d'identité de circuit dudit second appel ou un identifiant d'appel dudit second appel.

9. BSC selon la revendication 8, dans lequel ledit module d'établissement de canal interne est en outre configuré pour : lorsque ledit BSC joue le rôle de BSC de destination, juger si ledit canal interne a l'autorisation d'être utilisé pour transmettre la voix du plan utilisateur desdits premier appel et second appel conformément à un état en cours dudit second appel après que ledit BSC de destination a établi ledit canal interne et avant réception dudit message de détection de transfert (410) envoyé par ladite BTS de destination, et utiliser, uniquement lorsqu'un résultat de jugement est admissible, ledit canal interne pour transmettre la voix du plan utilisateur desdits premier appel et second appel.

10. Système de station de base, comprenant ledit BSC selon la revendication 8 ou 9 jouant le rôle de BSC de source et de BSC de destination.

11. Système de communication mobile, comprenant un système de station de base de source, un système de station de base de destination et un MSC ; ledit système de station de base de source comprenant un BSC de source, ledit système de station de base de destination comprenant un BSC de destination et une BTS de destination, le système de communication mobile étant **caractérisé en ce que** :
ledit MSC est configuré, après réception d'un message de transfert demandé (402) envoyé par ledit BSC de source, pour juger si un premier appel correspondant à ce message constitue un appel local avec un second appel après transfert, et si oui, envoyer un message de demande de transfert (403) comprenant un identifiant d'appel local audit BSC de destination ; ledit identifiant d'appel local est utilisé pour identifier ledit second appel ;
ledit BSC de destination est configuré pour établir un canal interne pour transmettre une voix de plan utilisateur desdits premier appel et second appel entre des utilisateurs desdits premier appel et second appel sans passer par un coeur de réseau conformément audit identifiant d'appel local après réception dudit message de demande de transfert (403), et utiliser ledit canal interne pour transmettre la voix du plan utilisateur desdits premier appel et second appel après réception d'un message de détection de transfert (410) envoyé par ladite BTS de destination ;
dans lequel ledit identifiant d'appel local comprend un codec d'identité de circuit dudit second appel ou un identifiant d'appel dudit second appel.

12. Système selon la revendication 11, dans lequel ledit BSC de destination est en outre configuré pour :
juger si ledit canal interne a l'autorisation d'être utilisé pour transmettre la voix du plan utilisateur desdits premier appel et second appel conformément à un état en cours dudit second appel après que ledit BSC de destination a établi ledit canal interne et avant réception dudit message de détection de transfert (410) envoyé par ladite BTS de destination, et utiliser, uniquement lorsqu'un résultat de jugement est admissible, ledit canal interne pour transmettre la voix du plan utilisateur desdits premier appel et second appel.
